# EUROPEAN PATENT SPECIFICATION

(11) **EP 0 282 687 B1**
(45) Date of publication and mention of the grant of the patent: **22.09.1993**
(21) Application number: 88100068.1
(22) Date of filing: 05.01.1988
(51) Int. Cl.: G01M 3/00, G01N 21/88

(54) **Intrapipe spot examination pig device**
Rohrmolch zur Punktuntersuchung im Rohrinnern
Furet pour l'examen de points à l'intérieur d'un tube

(30) Priority: 20.03.1987 JP 64239/87
(43) Date of publication of application: 21.09.1988
(73) Proprietor: NIPPON KOKAN KABUSHIKI KAISHA, Tokyo 100 (JP)
(72) Inventor: Yoshida, Masahito, Minami-ku Yokohama-shi (JP); Suzuki, Noritaka, Saiwai-ku Kawasaki-shi (JP); Fujisawa, Tomoji c/o Patent & License and Quality, 1-2, 1-chome Marunouchi Chiyoda-ku Tokyo (JP)
(74) Representative: Popp, Eugen, Dr.

(56) References cited:
- EP-A- 0 164 557
- EP-A- 0 170 609
- DE-A- 2 436 762
- GB-A- 1 312 594
- PATENT ABSTRACTS OF JAPAN, unexamined applications, section P, vol. 9, no. 144, June 19, 1985 THE PATENT OFFICE JAPANESE GOVERNMENT page 95 P 365

## Description

The present invention relates to an intrapipe spot examination pig device according to the introductory clause of the patent claim 1.

The EP-A-164 557 discloses an intrapipe spot examination pig device which is congruent in terms of its general type with the inventive intrapipe spot examination pig device. Therefore, the known device comprises a pig body to be travelled within a pipe line to be examined. Moreover, the known device is provided with detecting means, mounted on said pig body, for detecting a weld spot on the pipe line. Furthermore, the known device has a travelling distance meter for measuring a distance travelled by said pig body within the pipe line. Finally, the known device comprises photographing means, mounted on said pig body for photographing an inner surface of the pipe line.

A particular disadvantage of that known intrapipe spot examination pig device is the low examination accuracy and the impossibility to exactly eveluate various defects or off-normal spots on the inner surface of the pipe line. So, it is very difficult to locate of to determine the size and the position of any defects on the inner surface of the pipe line by the photographing means of the known device. Moreover, that known intrapipe spot examination pig device is disadvantageous with respect to the detecting means being not intended to measure the inner diameter of the pipe line. The detecting means merely detect cross-sectional changes of such an important spot as the entrance of the pipe line or a T-shaped joint but do not measure the inner surface of such a spot. More specifically, if that known device comes close to the region near the entrance of a vessel of the T-shaped joint, no reflection signals are produced from a photodetector. At that time, an on-off signal is picked up, so that the driving direction of this known device is reversed. And finally in that intrapipe spot examintion pig device the driving of the pig body and the driving mechanism, respectively are disadvantageous. The driving mechanism comprises a motor and detectors or sensors both providing the motor with signals. When the detectors detect changes on the cross section of the pipe line or the sensors detect on obstacle in the pipe line, the driving of the pig body is controlled so as to reverse the driving direction thereof. The used motor causes not only high manufactoring costs but also a great danger of getting stuck.

The EP-A-170 609 presents an intrapipe spot examination pig device, which is capable to move in the pipe line and to pass welding sockets of the pipe line, obstacles in the pipe line etc. For this purpose that known device comprises detecting and/or photographing means, mounted on the pig body, for detecting and/or photographing such welding sockets, obstacles etc. and rotating means for rotating that device around its own longitudinal axes. However, that known device is poor in the accuracy of examination. As a result it is not possible to exactly grasp various states of the inner surface of the pipe line.

It is accordingly the object of this invention to provide an intrapipe spot examination pig device which can detect any defect, such as a corroded spot, on the inner surface of a pipe line, to be examined, with the use of an ultrasonic wave transmitter and receiver, and can exactly photograph that spot within the pipe line through the switching of a camera shot mode from a direct- to a side-shot mode, whereby it is possible to exactly photograph the spot, including a defect weld spot, on the basis of the exact position data of that spot.

According to the present invention, this object is achieved with a characterizing features of the patent claims 1 and 5.

For this purpose, the photographing means of the present invention has direct-view photographing window at the front of a camera and side-view photographing window facing the inner surface of the photographing body section. When the weld spot detector detects the weld spot, a mirror is switched into a side-view mode. When the pig body travels by a necessary distance, a communicating unit is opened so that the differential pressure in the pipe line is cancelled. Consequently, the pig body stops. At this possition, the photographing body section is rotated, the camera is set to the most suitable position to photograph the weld spot. Thereafter, the communicating unit is closed so that a differential pressure is generated in the pipe line. The pig body is driven by the differential pressure, whereby the mirror is switched into the direct-view mode. When the pig body is driven by a necessary distance, the direct-view photographing is performed at the rear of the pig body with respect to the driving direction thereof. The controlling means for operating the photographing means is such that the above operations are successively performed when the pig body is travelling. Furthermore, in the present invention, after a weld spot detector detects a weld spot within the pipe line, a moving distance meter measures the moving distance of the pig body. When it is confirmed that the moving distance has reached a predetermined moving distance, i.e. when the pig body reaches a position in which photographing means can photograph the weld spot, the photographing means photographs the weld spot for examining wether or not the weld spot is abnormal. Also on the present invention, the measurement of the inner diameter of the pipe line is intended to detect a defective spot, such as a corroded spot on the inner surface of the pipe line. Finally, in the driving mechanism of the present invention, a differential pressure is generated in the pipe line, i.e. the pressure in front of the pig body and that in the back of the pig body becomes different from each other. By virtue of this differential pressure, the pig body travels within the pipe line. Even there is a stepped portion in the pipe line, the pig body can easily pass that stepped portion in comparison with the case of convential driving mechanism. The device of the present invention is also advantageous in that the pig body can travel for long distance and in that the danger of getting stuck in the pipe line is avoided, since the device of the present invention is not provided with a power source such as a motor.

The intrapipe spot examination pig device thus manufactured can photograph any spot, such as a corroded weld spot, through the switching of a photographing mode from a direct- to a side-shot mode, while locating the position of the weld spot by means of a moving distance meter.

All of the dependent patent claims joining to the patent claims 1 and 5 define expedient improvements of the invention.

Since a pipe inner diameter measuring means is provided which is made up of an ultrasonic wave transmitter and receiver, it can detect any abnormal or off-normal inner diameter of the pipe line. It is also possible to exactly photograph any off-normal or abnormal spot on the inner surface of the pipe line through the switching of a shot mode from a direct- to a side-view shot, while locating that spot by means of a moving distance meter.

This invention can be more fully understood from the following detailed description when taken in conjunction with the accompanying drawings, in which:
Fig. 1 is a diagrammatic view, partly in cross-section, showing a major portion of a pig body inserted in a pipe line to be examined;
Fig. 2 is a view showing transmitting and receiving transducers, mounted on a pig body, which measure an atmosphere within a pipe line to be examined;
Fig. 3 is a block diagram showing an electric circuit of a pig device according to one embodiment of this invention; and
Fig. 4 is a view, partly in cross-section, showing a pig device according to another embodiment of this invention.

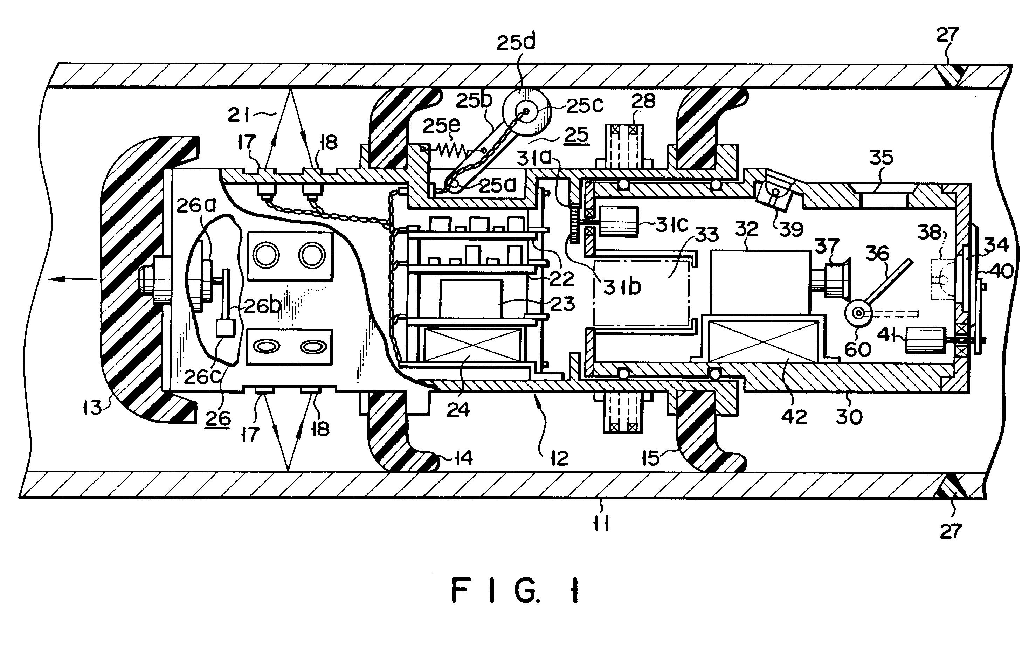

As shown in Fig. 1, pig body 12 is inserted into pipe line 11 (hereinafter referred to merely as a pipe line) to be examined. A measuring means is mounted on pig body 12 to measure various inner states of the pipe line. Pig body 12 can be moved, in a direction of an arrow in Fig. 1, utilizing a pressure difference created ahead and behind the pig device within the pipe line. If any abrupt bend or curve is present within the pipe line during the run of pig body 12, cushion body 13, such as urethane rubber, is provided on the head of pig body 12 so as to prevent the measuring means on the pig device from being broken due to the collision of the pig device with the abrupt bend or curve. A pair of sealing cups 14, 15 for pressure reception are provided outside pig body 12 such that they are located at a predetermined interval in the longitudinal direction of the pig device. As sealing cups 14, 15 use is made of a soft, durable material, such as urethane. Even if any step is formed on the inner surface of the pipe line during the travelling of pig body 12, pig body 12 can successfully traverse the step due to the soft nature of sealing cups 14, 15. Given the pressure difference ahead and behind the pig body during the run, sealing cups 14, 15 receive that pressure difference, causing pig body 12 to be driven within the pipe line.

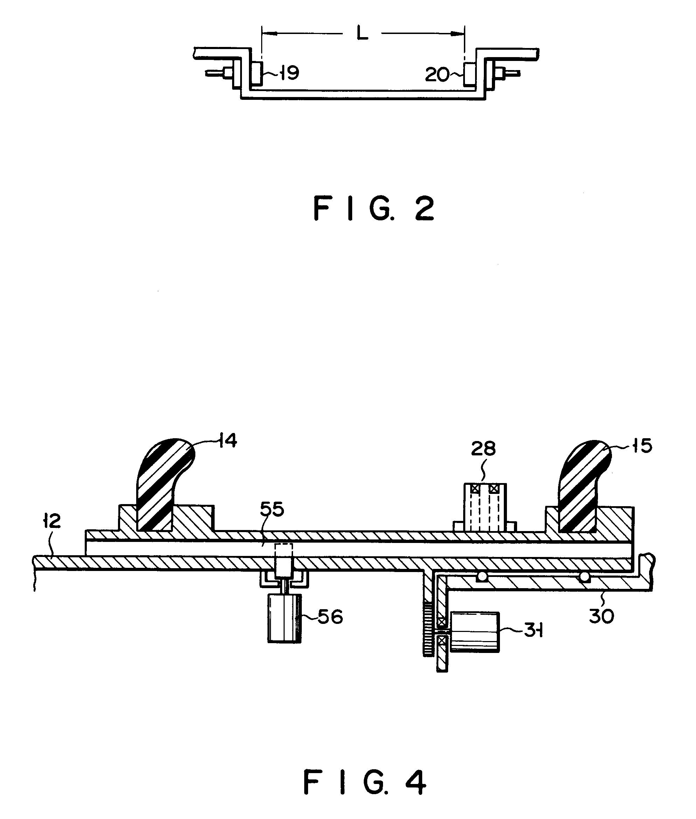

A pipe inner diameter measuring means is comprised of at least one pair of transmitting and receiving transducers 17 and 18. These transducers are provided, at a predetermined interval, on the outside of pig body 12 in the axial direction of the pipe. An ultrasonic wave is transmitted from transmitting transducer 17 toward the inner side wall of the pipe line. A wave echoed back from the inner side wall of the pipe line is received by receiving transducer 18. In this way, the pipe inner diameter is measured based on the transmit/receive time. Needless to say, a plurality of pairs of transmitting/receiving transducers may be provided on the outer periphery of pig body 12, as required. If, however, the atmosphere within the pipe line, such as the temperature, humidity and pressure, varies, then a corresponding level must evaluate as a variation value. It is, therefore, required that calibration data be evaluated in accordance with the atmosphere and then evaluated as an exact pipe inner diameter evaluation value. At least one pair of transmitting and receiving transducers 19 and 20 for calibration are provided on the outer side surface of pig body 12 such that the distance L is left, as a reference, in the axial direction of the pig body (Fig. 2). An exact pipe inner diameter value can be found by obtaining calibration data from the transmit/receive time of ultrasound and then calibrating measurement values obtained by transmitting/receiving transducers 17 and 18. Pig body 12 includes, as set out below, substrates 22 having electronic components for a function circuit, data processing section 23 including a microcomputer, and battery 24 supplying voltage to a respective electronic circuit.

Moving distance meter 25 for measuring the moving distance of pig body 12 is provided in a recess of the outer periphery of pig body 12 and comprised of arm 25b swingably mounted by pin hinge 25a on the pig body and roller 25d at the free end of arm 25b. The number of rotations of roller 25d is counted by rotation meter 25c. Arm 25b normally urges roller 25d into abutting engagement with the inner side surface of the pipe line by means of spring 25e which is anchored at its end to a projection of pig body 12.

In order for pig body 12 to be run within the pipe line, it is preferable that equal pressure be exerted on sealing cups 14, 15. Furthermore, in order for roller 25c to be rotated in a stable fashion it is preferred that pig body 12 be maintained at a horizontal position along the axial direction of the pipe line. Inclination angle meter 26 is provided within the pig body to measure the inclination angle relative to the axis of the pipe line. The inclination angle meter is comprised of rotation meter 26a, arm 26b suspended from rotation meter 26a and weight 26c mounted on the forward end of arm 26b.

Weld spot detector 28, such as an eddy sensor, is mounted on the outer surface of pig body 12 to detect welded spot 27 of pipe line 11.

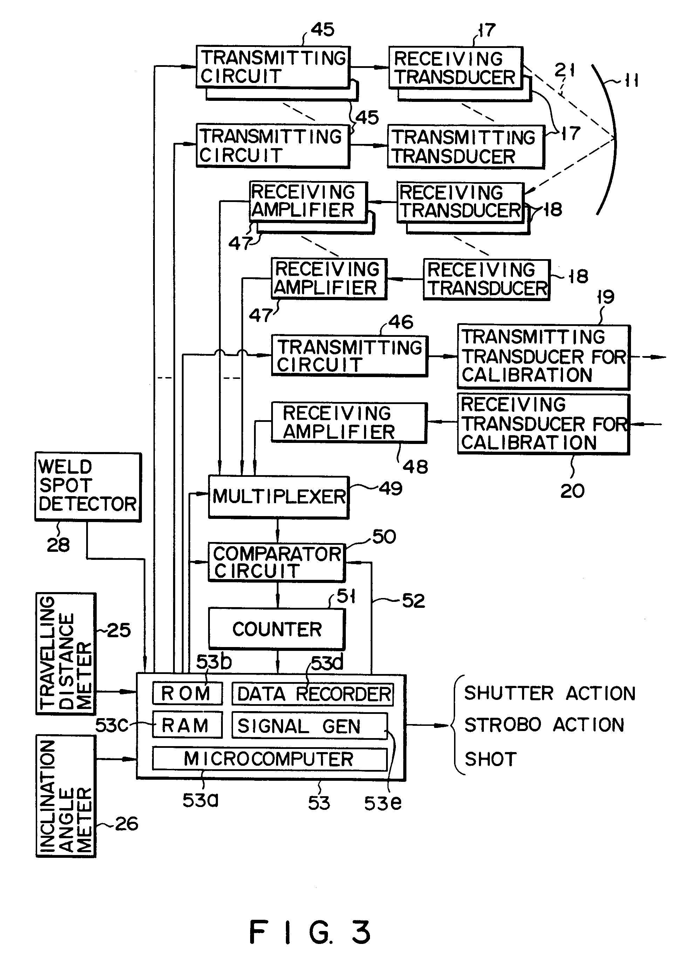

Photographing body section 30 is rotatably mounted on the rear end of pig body 12 and rotated by motor 31c through pinion 31b which meshes with rack 31a provided within pig body 12. Camera 32 is mounted within photographing body section 30 and film cartridge 33 is contained within the photographing body section 30. Camera 32 includes focusing mechanism 37 at the front so that the distance relative to an object to be photographed is measured in an auto-focusing fashion. Photographing body section 30 has direct-view photographing window 34 at the front of the camera and side-view photographing window 35 facing the inner side surface of the photographing section. Swingable mirror 36 is mounted at the front side of camera 32 so that it can be switched to a direct-view or side-view shot. Stated in more detail, a switching can be made either to the direct-view shot or to the side-view shot by driving motor 60 in accordance with the detection output of eddy sensor 28 or transmitting/receiving transducers 17 and 18 and thus rotating the mirror 36. Where the pipe line to be examined is initially known, a limit switch, not shown, is set relative to the front- and side-focusing positions and, in this case, according to the rotation position of photographing body section 30 the limit switch is rotated so that the direct- or side-view shot can be selectively taken. Direct-view strobo 38 is provided on the inside of direct-view photographing window 34, and side-view strobo 39 is provided in juxtaposition with side-view photographing window 35. Wiper 40 is provided near direct-view photographing window 34 and driven by motor 41 to allow the glass surface of window 34 to be wiped clean. Respective driving units within photographing body unit 30 are driven by a power source, such as battery 42. The pig device thus explained has a circuit arrangement as shown in Fig. 3.

Data processing section 53 includes, for example, microcomputer 53a, ROM 53b strong sequence program data, static RAM 53c storing data, such as moving distance, inclination angle, weld shot detection, pipe inner diameter measuring data and processing data, data recorder 53d, and signal generator 53e for generating a timing signal and reference clock. Signal generator 53e may be provided outside data processing section 53. A plurality of transmitting circuits 45 receives transmission timing signals sequentially sent from data processing section 53 and delivers a high frequency signal to corresponding transmitting transducer 17. Transmitting circuit 46 supplies a high frequency signal to transmitting transducer 19. The ultrasound from transmitting transducer 17 is, after being echoed backed from the inner surface of the pipe line, received by receiving transducer 18. The received signal, after being amplified by receiving amplifier circuit 47, is input to multiplier 49.

Receiving transducer 20 for calibration receives the ultrasound from transmitting transistor 19 for calibration. The received ultrasound, after being amplified by receiving amplifier circuit 48, is supplied as a signal to multiplexer 49. The reception of the signal from receiving amplifier circuits 47, 48 to multiplexer 49 is performed each time multiplexer 49 receives a transmission timing signal from data processing section 53. The output of multiplexer 49 is supplied to comparator circuit 50 where it is compared with a reference clock number. It is, therefore, possible to detect the time interval from the transmission to the reception of the ultrasound. The outputs of comparator circuit 50 are counted, as the number of pulses, by counter 51. The reference clock from data processing section 53 is transmitted to comparator circuit 50 via signal line 52. The count output of counter 51 is input to data processing section 53 where it is processed in a softward fashion. Moving distance meter 25, inclination angle meter 26 and weld spot detector 28 as shown in Fig. 1 are connected to data processing section 53. The processed output of data processing section 53 is delivered as an instruction output so that the shutter, strobo or shot action may be made.

The operation of the pig device thus manufactured will be explained below.

After the pig device has been inserted into pipe line 11, a pressure difference is created ahead and behind the pipe line with pressure reception sealing cups 14, 15 as a boundary. As a result, pig body 12 is travelled from a higher to a lower pressure side with the pig body as a reference. The moving distance of pig body 12 is detected sequentially by moving distance meter 25 and the corresponding output data is stored in RAM 53c of data processing section 23. After any off-normal or abnormal spot has been detected within the pipe line, a corresponding spot can be located outside the pipe line through the utilization of a record relating to the moving distance. With the moving of pig body 12, transmission timing signals are sequentially generated from data processing section 53 at a predetermined interval of time and supplied to transmitting circuits 45, 46, multiplexer 49 and comparator circuit 50. The transmitting circuits 45, 46 delivers a high-frequency signal to the corresponding transmitting transducer 17, 19. Transmitting transducer 17 transmits ultrasound 21 onto the inner surface of the pipe line.

The ultrasound echoed back from the inner surface of pipe line 11 is received by receiving transducer 18. The ultrasound of transmitting transducer 19 for calibration is received by receiving transducer 20 which faces the transducer 19 along the axial direction of the pipe line. The output of receiving transducer 18 is supplied to multiplexer 49 through receiving amplifier circuit 47 and the output of receiving transducer 20 is input to multiplexer 49 through amplifier circuit 48. In response to the transmission timing signal from data processing section 53, multiplexer 49 receives outputs from amplifiers 47, 48 and sequentially transmits them to comparator circuit 50. Since the outputs of the receiving transducers are sequentially and selectively input to multiplexer 49, even if a plurality of pairs of transmitting and receiving transducers are employed in the pig device, they are not subject to their mutual interference. Comparator 50 receives a transmission timing signal, and reference block signal via signal line 52, from data processing section 54, so that the time interval from the transmission to the reception of the ultrasound can be known by counting the reference clock signals derived from data processing section 53. The count value can be detected by counting the outputs of the comparator circuit by virtue of counter 51. The aforementioned count value represents measuring data corresponding to the distance from the outer surface of pig body 12 to the inner side wall of pipe line 11. It is, therefore, possible to obtain calibration data proportional to the reference time against the calibration reference distance L set between transmitting and receiving transducers 19 and 20. Data processing section 53 receives the count value of counter 51 and, if any calibration data is present, evaluates the pipe inner diameter with the use of the calibration data. The inside of the pipe, if being in an abnormal or off-normal state, can be known as such from that spot on the pipe liner diameter evaluated. If any off-normal or defect count value is detected, that distance moved by pig body 12 at that time can be known from the output of moving distance meter 25. In this case, taking the timing at which the camera 32 has reached the defect spot to be photographed, data proceeding section 53 delivers, for example, a shutter drive signal and strobo action control signal, so that the defect state on the inner surface of the pipe can be photographed. At the direct-view shot, swingable mirror 36 is set at a position indicated by the dot line in Fig. 1 so that the defect spot on the inner surface of the pipe can be shot with the front lens of camera 32 oriented toward direct-view photographing window 34. At the side-view shot, body section 30 is rotated, while a drive signal is continuously or intermittently supplied to motor 31c, with mirror 36 set at the position indicated by the solid line in Fig. 1 so that the front lens of the camera is oriented toward side-view photographing window 35. At this time, data processing section 53 intermittently supplies a shutter drive signal and strobo action control signal to the camera where the spot of interest is photographed. The image is recorded on cartridge film 33.

The detection of whether or not weld spot 27 on the pipe line is defective will be explained below in conjunction with the embodiment of this invention.

If the presence of weld spot 27 is detected by spot detector 28 during the travelling of pig body 12 within the pipe line, a spot detection signal is sent to data processing section 53. Data processing section 53, upon receipt of a weld spot detection signal, can evaluate that distance, over which pig body 12 has travelled, with the use of an output of moving distance meter 25. In this case, when side-view photographing window 35 of the pig body comes just that position of weld spot 27, a shutter drive signal and strobo action control signal are fed to camera 32 where that weld spot is photographed. As set forth above, any defect on the pipe inner diameter and on the weld spot of the pipe can be photographed with the use of camera 32. Inclination angle data measured by inclination angle meter 26 is input to RAM 53c in data processing section 53, where it is stored.

That data items thus obtained, for example, the inner diameter of the pipe, distance moved by the pig body and inclination angle of the pig relative to the axial direction, etc., are stored in RAM 53c in data processing section 53 and recorded in film cartridge 33. After pig body 12 has been travelled within the pipe line and removed from the pipe line, these data items are input to a proper interface of an external computer. In this way it is possible to evaluate, for example, any defect state within the pipe line and any defect weld spot of the pipe line. If, as the result of such examination, it is found that, for example, the pipe inner surface or weld spot 27 is severely corroded, a corresponding pipe section is replaced by a new one or any other anti-corrosion measure can be taken promptly. According to this invention, at least one pair of transmitting transducer 17 and receiving transducer 18, as well as a pair of transducers 19, 20 for calibration, are provided in the pig device, thus enabling a plurality of defect spots to be detected during one run of pig body 12 through the pipe line.

Furthermore, even if pig body 12 rotates relative to the axis of the pipe line during the run of the pig device within the pipe line, it is still possible to correctly recognize the defect spot of the pipe inner surface.

According to this invention, since the pair of sealing cups 14, 15 for pressure reception are provided, at a predetermined interval, on the side surface of pig body 12, the pig body can properly be run along the axis of the pipe line and, even if any recess is situated in any inner surface portion of the pipe line and even if any air-pressure leakage occurs at one (for example, sealing cup 14) of the pair of sealing cups 14, 15, the pig body can continue to run within the pipe line while, at the same time, receiving an enough great pressure by the other sealing cup. These sealing cups 14, 15 are so formed as to have a fish fin-like configuration and has a pliability and, even if the tube inner diameter somewhat varies, the pig body can still be travelled without being interrupted. Where the pipe line is closed at a remote end, the pig body can be moved backward under a back pressure (elevated pressure) and, at that time, the sealing cups can pliably be warped in the back direction.

Although pig body 12 has been explained as being continuously run within a pipe line with a pressure difference created ahead and behind sealing cups 14, 15, this invention is not restricted to the aforementioned embodiment. In another embodiment shown in Fig. 4, for example, pig body 12 can be stopped at any proper position within a pipe line.

Communicating unit 55 is provided on the outer surface of pig body 12 in the longitudinal direction and normally closed by valve unit 56 as indicated by a dotted line in Fig. 4. When, for example, a predetermined distance covered is detected from an output of travelling distance meter 25, data proceeding section 53 delivers an operation signal to valve unit 56, causing valve unit 56 to be retracted to a position indicated by a solid line in Fig. 4 to open communication unit 55. In that position, air flows through communication unit 55 and thus a pressure difference ceases to exist ahead and behind pig body 12, so that pig body 12 is stopped there. At that position, a spot of interest is photographed by camera 32 to obtain a stable, clear image.

Although in the aforementioned embodiment any defect spot on the inner surface of pipe line 11, including any defect weld spot, has been explained as been photographed only when it is located at that position, it can continuously be photographed, as a direct- or side-view mode, with the use of a television camera, video tape recorder, and so on, in which case illumination light can be used in place of strobo units 38, 39.

Although, in the embodiment shown in Fig. 1, weld spot detector 28 has been explained as being provided between sealing cups 14 and 15, it may be provided behind sealing cup 15 and, in this case, no particular restriction is made to the type of measurement, shape, etc. Furthermore, a plurality of magnetic members may be provided at predetermined intervals on the outer periphery of the pipe and if, in this case, a magnetic field is detected by a magnetic sensor during the run of pig body 12, any measurement error as induced in conjunction with the travelling distance of pig body 12 can properly been corrected on the pig device of this invention.

## Claims

1. An intrapipe spot examination pig device comprising a pig body (12) to be travelled within a pipe line to be examined;
detecting means (28), mounted on said pig body, for detecting a weld spot on the pipe line (11);
a travelling distance meter (25) for measuring a distance travelled by said pig body within the pipe line;
photographing means (32), mounted on said pig body, for photographing an inner surface of the pipe line;
**characterized** by
a direct view photographing window (34) at the front of the photographing means (32), a side-view photographing window (35), a swingable mirror (36) mounted at the front side of the photographing means (32) so that it can be switched to a direct view or side-view shot, and controlling means (53) for controlling a photographing operation of said photographing means (32) when any weld spot (27) is detected by said weld spot detecting means (28) after said travelling distance meter detects a predetermined distance covered, the pig body being movable by a differential pressure which is generated in the pipe line ahead and behind the pig body (12) causing the said pig body (12) to be driven within the pipe line.

2. An intrapipe spot examination pig device according to claim 1, characterized in that said weld spot detecting means (28) is an eddy sensor.

3. An intrapipe spot examination pig device according to claim 1, characterized in that said controlling means (53) controls said photographing means (32) at all times so that a photographing operation may be performed.

4. An intrapipe spot examination pig device according to any of claims 1 to 3, characterized by distance calibration means including a pair of transmitting (19) and receiving (20) transducers.

5. An intrapipe spot examination pig device, comprising:
a pig body (12) to be supplied within a pipe line (11) to be examined;
detecting means (28), mounted on said pig body (12), for detecting any weld spot (27), on the inner surface of said pipe line (11);
a travelling distance meter (25) for measuring a distance travelled by said pig body within the pipe line;
photographing means (32), mounted on said pig body (12), for photographing the inner surface of said pipe line (11);
**characterized** by
a direct view photographing window (34) at the front of the photographing means (32), a side-view photographing window (35), a swingable mirror (36) mounted at the front side of the photographing means (32) so that it can be switched to a direct view or side-view shot;
pipe inner diameter measuring means (17, 18) having at least one pair of an ultrasound transmitter (17) and ultrasound receiver (18) located, in a predetermined interval, on an outer periphery of said pig body (12) such that they are arranged in an axial direction of said pipe line (11), said pipe inner diameter measuring means measuring an inner diameter of the pipe (11) on the basis of a time interval from the transmission of the ultrasound to the reception of it;
controlling means (53) for controlling said photographing means for a photograph to be taken relative to the inner surface of said pipe line (11) when said pipe inner diameter measuring means (17, 18) detects a defect spot on the pipe inner surface, when said weld spot detecting means (28) detects any weld spot (27) within the pipe line (11), after said travelling distance meter (25) detects a predetermined distance covered, the pig body being movable by a differential pressure which is generated in the pipe line ahead and behind the pig body (12) causing the said pig body (12) to be driven within the pipe line.

6. An intrapipe spot examination pig device according to claim 5, characterized in that said controlling means (53) controls said photographing means (32) at all times so that a photographing operation may be performed.

7. An intrapipe spot examination pig device according to claim 5 or 6, characterized by distance calibration means including a pair of transmitting (19) and receiving (20) transducers.

## Patentansprüche

1. Molch zum Prüfen von rohrinnenseitigen Punkten, der aufweist:
einen Molchkörper (12), um innerhalb einer zu prüfenden Rohrleitung bewegt zu werden;
eine Detektiereinrichtung (28), die an dem Molchkörper angebracht ist, um einen Schweißpunkt an der Rohrleitung (11) zu detektieren;
einen Bewegungsstreckenmesser (25), um eine von dem Molchkörper innerhalb der Rohrleitung zurückgelegte Strecke zu messen;
eine Fotografiereinrichtung (32), die an dem Molchkörper angebracht ist, um eine Innenfläche der Rohrleitung zu fotografieren;
**gekennzeichnet** durch
ein Direktsicht-Fotografierfenster (34) an der Vorderseite der Fotografiereinrichtung (32), ein Seitensicht-Fotografierfenster (35), einen schwenkbaren Spiegel (36), der an der Vorderseite der Fotografiereinrichtung (32) so angebracht ist, daß er für eine Direktsicht- oder Seitensichtaufnahme umgeschaltet werden kann, und eine Steuereinrichtung (53), um einen Fotografierbetrieb der Fotografiereinrichtung (32) zu steuern, wenn irgendein Schweißpunkt (27) von der Schweißpunkt-Detektiereinrichtung (28) detektiert wird, nachdem der Bewegungsstreckenmesser eine vorbestimmte zurückgelegte Strecke detektiert hat, wobei der Molchkörper durch einen Differenzdruck bewegbar ist, der in der Rohrleitung vor und hinter dem Molchkörper (12) erzeugt wird und bewirkt, daß der Molchkörper (12) innerhalb der Rohrleitung angetrieben wird.

2. Molch zum Prüfen von rohrinnenseitigen Punkten nach Anspruch 1, dadurch gekennzeichnet, daß die Schweißpunkt-Detektiereinrichtung (28) ein Wirbelsensor ist.

3. Molch zum Prüfen von rohrinnenseitigen Punkten nach Anspruch 1, dadurch gekennzeichnet, daß die Steuereinrichtung (53) die Fotografiereinrichtung (32) zu jeder Zeit steuert, so daß ein Fotografiervorgang durchgeführt werden kann.

4. Molch zum Prüfen von rohrinnenseitigen Punkten nach einem der Ansprüche 1 bis 3, gekennzeichnet durch eine Streckenkalibriereinrichtung, die ein Paar von Sende-(19)- und Empfangs-(20)-Wandlern aufweist.

5. Molch zum Prüfen von rohrinnenseitigen Punkten, der aufweist:
einen Molchkörper (12), um innerhalb einer zu prüfenden Rohrleitung (11) zugeführt zu werden;
eine Detektiereinrichtung (28), die an dem Molchkörper (12) angebracht ist, um jeden Schweißpunkt (27) an der Innenfläche der Rohrleitung (11) zu detektieren;
einen Bewegungsstreckenmesser (25), um eine von dem Molchkörper innerhalb der Rohrleitung zurückgelegte Strecke zu messen;
eine Fotografiereinrichtung (32), die an dem Molchkörper (12) angebracht ist, um eine Innenfläche der Rohrleitung (11) zu fotografieren;
**gekennzeichnet** durch
ein Direktsicht-Fotografierfenster (34) an der Vorderseite der Fotografiereinrichtung (32), ein Seitensicht-Fotografierfenster (35), einen schwenkbaren Spiegel (36), der an der Vorderseite der Fotografiereinrichtung (32) so angebracht ist, daß er für eine Direktsicht- oder Seitensichtaufnahme umgeschaltet werden kann;
eine Rohrinnendurchmesser-Meßeinrichtung (17, 18), die mindestens ein Paar von einem Ultraschallsender (17) und einem Ultraschallempfänger (18) in einem vorbestimmten Abstand an einem Außenumfang des Molchkörpers (12) derart positioniert hat, daß sie in einer axialen Richtung der Rohrleitung (11) angeordnet sind, wobei die Rohrinnendurchmesser-Meßeinrichtung einen Innendurchmesser des Rohrs (11) auf der Basis eines Zeitintervalls zwischen dem Senden des Ultraschalls und dessen Empfang mißt;
eine Steuereinrichtung (53), um die Fotografiereinrichtung für eine zu machende Fotografie relativ zu der Innenfläche der Rohrleitung (11) zu steuern, wenn die Rohrinnendurchmesser-Meßeinrichtung (17, 18) einen Fehlerpunkt an der Rohrinnenfläche detektiert, wenn die Schweißpunkt-Detektiereinrichtung (28) irgendeinen Schweißpunkt (27) innerhalb der Rohrleitung (11) detektiert, nachdem der Bewegungsstreckenmesser (25) eine vorbestimmte zurückgelegte Strecke detektiert hat, wobei der Molchkörper durch einen Differenzdruck bewegbar ist, der in der Rohrleitung vor und hinter dem Molchkörper (12) erzeugt wird und bewirkt, daß der Molchkörper (12) innerhalb der Rohrleitung angetrieben wird.

6. Molch zum Prüfen von rohrinnenseitigen Punkten nach Anspruch 5, dadurch gekennzeichnet, daß die Steuereinrichtung (53) die Fotografiereinrichtung (32) zu jeder Zeit steuert, so daß ein Fotografiervorgang durchgeführt werden kann.

7. Molch zum Prüfen von rohrinnenseitigen Punkten nach Anspruch 5 oder 6, gekennzeichnet durch eine Streckenkalibriereinrichtung, die ein Paar von Sende-(19)- und Empfangs-(20)-Wandlern aufweist.

## Revendications

1. Furet pour l'examen de points à l'intérieur d'un tube, comprenant :
un corps de furet (12) destiné à être déplacé à l'intérieur d'une conduite qui doit être examinée ;
un moyen de détection (28) monté sur ledit corps de furet pour détecter un point de soudage sur la conduite (11) ;
un dispositif de mesure de distance de déplacement (25) pour mesurer une distance parcourue par ledit corps de furet à l'intérieur de la conduite ;
un moyen de prise de photographie (32) monté sur ledit corps de furet pour photographier une surface interne de la conduite,
caractérisé par :
une fenêtre de prise de photographie par vue directe (34) prévue à l'avant du moyen de prise de photographie (32), une fenêtre de prise de photographie par vue latérale (35), un miroir oscillant (36) monté au niveau du côté avant du moyen de prise de photographie (32) de telle sorte qu'il puisse être commuté pour une prise de vue directe ou pour une prise de vue latérale ; et
un moyen de commande (53) pour commander l'opération de prise de photographie dudit moyen de prise de photographie (32) lorsqu'un quelconque point de soudage (27) est détecté par ledit moyen de détection de point de soudage (28) après que ledit dispositif de mesure de distance de déplacement détecte une distance prédéterminée parcourue, le corps de furet pouvant être déplacé par une pression différentielle qui est générée dans la conduite à l'avant et à l'arrière du corps de furet (12), laquelle provoque l'entraînement dudit corps de furet (12) à l'intérieur de la conduite.

2. Furet pour l'examen de points à l'intérieur d'un tube selon la revendication 1, caractérisé en ce que ledit moyen de détection de points de soudage (28) est un détecteur de courant de fuite.

3. Furet pour l'examen de points à l'intérieur d'un tube selon la revendication 1, caractérisé en ce que ledit moyen de commande (53) commande ledit moyen de prise de photographie (32) en permanence de telle sorte qu'une opération de prise de photographie puisse être réalisée.

4. Furet pour l'examen de points à l'intérieur d'un tube selon l'une quelconque des revendications 1 à 3, caractérisé par un moyen d'étalonnage de distance incluant une paire de transducteurs d'émission (19) et de réception (20).

5. Furet pour l'examen de points à l'intérieur d'un tube comprenant :
un corps de furet (12) destiné à être appliqué à l'intérieur d'une conduite (11) qui doit être examinée ;
un moyen de détection (28) monté sur ledit corps de furet (12) pour détecter un quelconque point de soudage (27) sur la surface interne de ladite conduite (11) ;
un dispositif de mesure de distance de déplacement (25) pour mesurer une distance parcourue par ledit corps de furet à l'intérieur de la conduite ;
un moyen de prise de photographie (32) monté sur ledit corps de furet (12) pour photographier la surface interne de ladite conduite (11),
caractérisé par :
une fenêtre de prise de photographie par vue directe (34) située à l'avant du moyen de prise de photographie (32), une fenêtre de prise de photographie par vue latérale (35), un miroir oscillant (36) monté au niveau du côté avant du moyen de prise de photographie (32) de telle sorte qu'il puisse être commuté pour une prise de vue directe ou pour une prise de vue latérale ;
un moyen de mesure de diamètre interne de tube (17, 18) comportant au moins une paire constituée par un émetteur à ultrasons (17) et par un récepteur à ultrasons (18) placés, selon un intervalle prédéterminé, sur une périphérie externe dudit corps de furet (12) de telle sorte qu'ils soient agencés suivant une direction axiale de ladite conduite (11), ledit moyen de mesure de diamètre interne de tube mesurant un diamètre interne du tube (11) sur la base d'un intervalle temporel qui va de l'émission des ultrasons à la réception de ceux-ci ;
un moyen de commande (53) pour commander ledit moyen de prise de photographie pour la prise d'une photographie quant à la surface interne de ladite conduite (11) lorsque ledit moyen de mesure de diamètre interne de tube (17, 18) détecte un point défectueux sur la surface interne du tube, lorsque ledit moyen de détection de point de soudage (28) détecte un quelconque point de soudage (27) à l'intérieur de la conduite (11), après que ledit dispositif de mesure de distance parcourue (25) détecte une distance prédéterminée parcourue, le corps de furet pouvant être déplacé par une pression différentielle qui est générée dans la conduite à l'avant et à l'arrière du corps de furet (12) ce qui provoque l'entraînement dudit corps de furet (12) à l'intérieur de la conduite.

6. Furet pour l'examen de points à l'intérieur d'un tube selon la revendication 5, caractérisé en ce que ledit moyen de commande (53) commande ledit moyen de prise de photographie (32) en permanence de telle sorte qu'une opération de prise de photographie puisse être réalisée.

7. Furet pour l'examen de points à l'intérieur d'un tube selon la revendication 5 ou 6, caractérisé par un moyen d'étalonnage de distance incluant une paire de transducteurs d'émission (19) et de réception (20).
